# EUROPÄISCHE PATENTSCHRIFT

(11) **EP 1 745 096 B1**
(45) Veröffentlichungstag und Bekanntmachung des Hinweises auf die Patenterteilung: **30.04.2008**
(21) Anmeldenummer: 05717112.6
(22) Anmeldetag: 21.03.2005
(51) Int. Cl.: C08K 5/17, C08L 63/02, C08L 63/00, C09D 163/00, C09D 163/02, C08K 5/05, C08K 5/09, C08K 5/06, C08K 3/00, C08K 5/16

(54) **HÄRTBARE ZUSAMMENSETZUNGEN AUF BASIS VON EPOXIDHARZEN UND 3(4)-(AMINOMETHYL)-CYCLOHEXAN-PROPANAMIN UND 1,4(5)-CYCLOOCTANDIMETHANAMIN**
THERMOHARDENABLE EPOXY RESIN-BASED COMPOSITIONS, 3(4)-(AMINOMETHYL)-CYCLOHEXANE-PROPANAMINE AND 1,4(5)-CYCLOOCTANE DIMETHANAMINE
COMPOSITIONS DURCISSABLES A BASE DE RESINES EPOXYDES AINSI QUE DE 3(4)-(AMINOMETHYL)-CYCLOHEXANE-PROPANAMINE ET DE 1,4(5)-CYCLOOCTANE-DIMETHANAMINE

(30) Priorität: 14.05.2004 DE 102004024439
(43) Veröffentlichungstag der Anmeldung: 24.01.2007
(73) Patentinhaber: Evonik Degussa GmbH, 40474 Düsseldorf (DE)
(72) Erfinder: ORTELT, Martina, 48249 Dülmen (DE)
(86) Internationale Anmeldenummer: PCT/EP2005/051290
(87) Internationale Veröffentlichungsnummer: WO 2005/111135

(56) Entgegenhaltungen:
- US-A- 2 534 088
- US-A- 3 327 016
- US-A- 3 367 911
- US-A- 4 885 391
- US-A- 4 894 431
- US-A- 5 350 779
- ANONYMOUS: "Curable epoxy resin composition" Mai 1994 (1994-05), RESEARCH DISCLOSURE, KENNETH MASON PUBLICATIONS, WESTBOURNE, GB , XP007119780 ISSN: 0374-4353 Zusammenfassung

## Beschreibung

Die Erfindung betrifft härtbare Zusammensetzungen auf Basis von Epoxidharzen und 3(4)-(Aminomethyl)-cyclohexan-propanamin und 1,4(5)-Cycloctandimethanamin.

Epoxidharze sind Prepolymere, welche pro Molekül zwei oder mehr Epoxidgruppen enthalten. Die Reaktion dieser Harze mit einer Reihe von Härtungsmitteln führt zu vernetzten Polymeren. Ein Überblick über die Harze und Härter sowie deren Verwendung und Eigenschaften wird in H.Schuhmam, "Handbuch Betonschutz durch Beschichtungen", Expert Verlag 1992, Seite 396 bis 428 gegeben.

Es ist bekannt, dass zur Härtung von Epoxidharzen, etwa solchen auf Basis von Bisphenol-A-diglycidylether, neben zahlreichen anderen aminischen Härtern auch cycloaliphatische Diamine, z. B. Isophorondiamin (IPD), verwendet werden. Nachteilig ist jedoch in den Anwendungen häufig die relativ geringe Reaktivität im Vergleich zu aliphatischen Aminen.

Cycloaliphatische Amine härten im Allgemeinen bei Raumtemperatur nur unvollständig aus. Zum Erhalt ausreichender Eigenschaften ist es jedoch wichtig, einen möglichst hohen Aushärtungsgrad zu erzielen.

Aliphatische Amine wie z. B. Ethylendiamin, Diethylentriamin und Triethylentetramin bzw. araliphatische Amine wie z. B. m-Xylilendiamin sind zwar reaktiver, besitzen jedoch Nachteile wie u. a. hohe Dampfdrucke bzw. hohe VergiIbungsneigung.

Es bestand daher Bedarf an aminischen Härtern, die einerseits die Vorteile der cycloaliphatischen Härter, andererseits jedoch eine höhere Reaktivität besitzen.

Es wurde nun gefunden, dass sich bei Einsatz von 3(4)-(Aminomethyl)-cyclohexan-propanamin (C64-Diamin) und/oder 1,4(5)-Cyclooctandimethanamin (BAMCO) als Reaktionskomponente in Epoxidharzen gute Endeigenschaften bei jedoch gleichzeitig guter Aushärtung ergeben. Gegenstand der Erfindung sind härtbare Zusammensetzungen im Wesentlichen enthalten Gegenstand der Erfindung sind härtbare Zusammensetzungen im Wesentlichen enthalten
A) mindestens ein Epoxidharz, wobei als Epoxidharze Polyepoxide auf Basis von Bisphenol A-diglycidylether, Bisphenol F-diglycidylether und/oder cycloaliphatische Typen enthalten sind
   und
B) mindestens einen Härter ausgewählt aus
   B1) 3(4)-(Aminomethyl)-cyclohexan-propanamin (C64-Diamin)
      oder
   B2) 1,4(5)-Cyclooctandimethanamin (BAMCO)
sowie deren Verwendung.

Die Amine B1) und B2) haben folgende Formel:

| | |
|---|---|
| 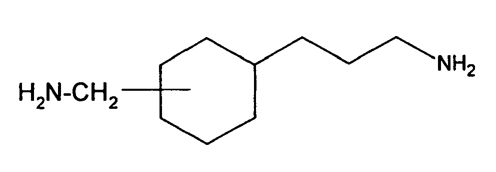 | 3(4)-(Aminomethyl)-cyclohexan-propanamin (C64-Diamin), B 1 |
| | |
| 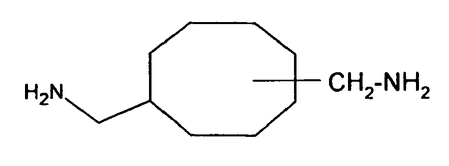 | 1,4(5)-Cyclooctandimethanamin (BAMCO), B2 |

Sie werden aus 4-Vinylcyclohexen (C64-Diamin) bzw. 1,5-Cyclooctadien (BAMCO) über eine Carboxymethylierung mit anschließender reduktiver Aminierung hergestellt und bestehen aus Mischungen verschiedener Isomerer.

Als Epoxidharzkomponente A) kommen prinzipiell alle Epoxydharze in Frage, die mit Aminen gehärtet werden können. Zu den Epoxidharzen zählen z. B. Polyepoxide auf Basis von Bisphenol A-diglycidylether, Bisphenol F-diglycidylether oder cycloaliphatische Typen. Vorzugsweise werden jedoch Epoxidharze auf Basis Bisphenol A und gegebenenfalls die auf Basis Bisphenol F - ggf. auch in Mischung - eingesetzt. Harze und Härter werden dabei stöchiometrischen Verhältnis möglich.

Die härtbaren Zusammensetzungen können auch weitere Aminhärter, die mindestens 2 oder mehr primäre und/oder sekundäre Aminogruppen enthalten, z. B. Methylendianilin, N-Aminoe1hylpiperazin, Isophorondiamin, m-Phenylenbis(methylamin), Trimethylhexmethylendiamin, Polyoxyalkylenamine, Polyaminoamide, Umsetzungsprodukte von Aminen mit Acrylnitril und Mannichbasen. Diese werden in Mengen von 0,5 bis 95 Gew.-%, bevorzugt in Mengen von 10 bis 90 Gew.-%, und besonders bevorzugt in Mengen von 50 bis 80 Gew.-%, bezogen auf eingesetzte Amine, eingesetzt. Amine und Epoxidharze werden im Allgemeinen im stöchiometrischen Verhältnis gehärtet. Abweichungen davon sind jedoch in gewissem Rahmen in Abhängigkeit vom Härtertyp und der Anwendung möglich.

Je nach entsprechendem Einsatzgebiet enthalten Epoxidharzformulierungen außer einem ein oder mehrere Epoxidgruppen haltigen Harz und einem oder mehreren Hartem, Modifizierungsmittel, Reaktionsbeschleuniger, Reaktivverdünner, Lösemittel und/oder Additive wie u. a. Entschäumer, Füllstoffe und/oder Pigmente.

Bei Faserverbundwerkstoffen enthalten die Formulierungen zusätzlich die entsprechenden Fasern und/oder Vliese.

Als Modifizierungsmittel eignen sich besonders Verbindungen wie z. B. Benzylalkohol, Alkylphenole oder Kohlenwasserstoffharze.

Zu den Reaktionsbeschleunigern gehören z. B. organische Säuren wie Milchsäure und Salicylsäure, oder Verbindungen tertiärer Amine wie z. B. Tris(dimethylaminomethyl)phenol und Benzyldimethylamin.

Geeignete Reaktivverdünner sind z. B. mono- oder polyfunktionelle, flüssige Epoxidverbindungen wie z. B. 2-Ethylliexylglycidylether, Hexandioldiglycidylether und Trimethylolpropantriglycidylether.
Zu den einsetzbaren Lösemitteln gehören z. B. aromatische Kohlenwasserstoffe wie Xylol, oder Alkohole wie Ethanol, Propanole oder Butanole.

Weiterhin werden die für Beschichtungen typischen Pigmente und Füllstoffe sowie Additive eingesetzt.

Je nach Verwendungszweck werden solche Systeme bei unterschiedlichen Temperaturen gehärtet. So härtet man z. B. bei den Anwendungen im Bereich Bauchemie und Korrosionsschutz meist bei Umgebungstemperatur, während z. B. bei Faserverbundwerkstoffen bei erhöhter Temperatur (der sogenannten "Heißhärtung") gehärtet wird.

Gegenstand der Erfindung ist auch die Verwendung von härtbaren Zusammensetzungen in Epoxidsystemen, welche bei Umgebungstemperatur gehärtet werden, bevorzugt bei 0 bis 35 °C, besonders bevorzugt bei 5 bis 30 °C.

Gegenstand der Erfindung ist auch die Verwendung von härtbaren Zusammensetzungen, wobei die Epoxidsysteme heißgehärtet werden, bei 50 bis 180 °C, bevorzugt bei 80 bis 180 °C, besonders bevorzugt bei 80 bis 130 °C.

Die härtbaren Zusammensetzungen werden insbesondere verwendet für Beschichtungen, insbesondere für Beschichtungen auf Metall, mineralischen Untergründen und Kunststoffen sowie für Fußbodenbeschichtungen, Lacke, Polymerbeton, Reparatursysteme, Ankermasse, Klebstoffe, Faserverbundwerkstoffe, Vergussmassen und Imprägnierungen.

Die nachfolgenden Beispiele zeigen Ergebnisse mit den erfindungsgemäßen Produkten in verschiedenen Systemen.

### Beispiele

**Tabelle 1: Raumtemperaturhärtung**

| **Rezepturbestandteile** | **C64 Diamin** | **BAMCO** | **IPD** |
|---|---|---|---|
| | **Mengen in Gramm** | | |
| **Härter-Komponente** | | | |
| Diamin C64 | 100 | - | - |
| BAMCO | - | 100 | - |
| Isophorondiamin | - | - | 100 |
| Benzylalkohol | 30 | 30 | 30 |

| **Harz-Komponente** | | | |
|---|---|---|---|
| Menge Epoxidharz pro 100 g Härter | | | |
| (Standardharz auf Basis Bisphenol A; z. B. Epikote 828) | 33 | 33 | 30 |

| **Eigenschaften** | **Bewertung** | | |
|---|---|---|---|
| Sprödigkeit | Nicht spröde/ durchgehärtet | Nicht spröde/ durchgehärtet | Spröde/ zu wenig ausreagiert |

Mit den reaktiveren Diaminen C64 Diamin und BAMCO werden versprödungsfreiere, bei Raumtemperatur besser ausgehärtete Epoxidsysteme erhalten.

**Tabelle 2: Raumtemperaturhärtung**

| **Rezepturbestandteile** | | |
|---|---|---|
| **Härter-Komponente** | | |
| C64 Diamin | 80 | - |
| BAMCO | - | 80 |
| Isophorondiamin | 20 | 20 |
| Benzylalkohol | 88 | 88 |
| Salicylsäure | 12 | 12 |
| Standardharz auf Basis | 20 | 20 |
| Bisphenol A; z. B. Epikote 828 | | |
| Harzkomponente | | |
| Menge Epoxidharz pro 100 g Härter | | |
| (Standardharz auf Basis Bisphenol A; z. B. Epikote 828) | 55 | 55 |

| **Eigenschaften** | | |
|---|---|---|
| Klebfreiheit | < 1 Tag | < 1 Tag |

| Wärmeformbeständigkeit | | |
|---|---|---|
| nach 1 Tag | 42 °C | 45 °C |
| Nach 7 Tagen | 52 °C | 55 °C |

| Pendelhärte | | |
|---|---|---|
| Nach 1 Tag | 125 | 140 |
| Nach 7 Tagen | 205 | 210 |

Mit C64-Diamin und BAMCO lassen sich in Abmischungen mit anderen Aminen wie z. B. IPD sehr reaktive, klebfreie Formulierungen mit guten Eigenschaften herstellen.

**Tabelle 3: Heißhärtung**

| **Rezepturbestandteile** | | | |
|---|---|---|---|
| **Härter-Komponente** | | | |
| C64 Diamin | 100 | - | - |
| BAMCO | - | 100 | - |
| IPD | - | - | 100 |

| **Harzkomponente** | | | |
|---|---|---|---|
| **Rezepturbestandteile** | | | |
| Menge Epoxidharz pro 100 g Härter | | | |
| (Standardbarz auf Basis Bisphenol A; z. B. Epikote 828) | 23 | 23 | 23 |

| **Eigenschaften nach Härtung** | | | |
|---|---|---|---|
| **1 Stunde 50 °C +** | | | |
| **1 Stunde 110 °C** | | | |
| Wärmeformbeständigkeit | 126 °C | 131 °C | 139 °C |
| Wasseraufnahme nach 28 | 4 Gew.-% | 4 Gew.-% | 4 Gew.-% |
| Tagen bei 100 °C | | | |
| Acetonaufnahme nach 28 | 6 Gew.-% | 6 Gew.-% | 16 Gew.% |
| Tagen bei 23 °C | | | |

Es lassen sich mit C64 Diamin- und BAMCO-Epoxidsystemen die hervorragenden Wäremformbeständigkeiten wie bei cycloaliphatischen Diaminen erreichen mit jedoch verbesserter Acetonbeständigkeit.

## Patentansprüche

1. Härtbare Zusammensetzungen im Wesentlichen enthalten
A) mindestens ein Epoxidharz, wobei als Epoxidharze Polyepoxide auf Basis von Bisphenol A-diglycidylether, Bisphenol F-diglycidylether und/oder cycloaliphatische Typen enthalten sind
und
B) mindestens einen Härter ausgewählt aus
B1) 3(4)-(Aminomethyl)-cyclohexan-propanamin (C64-Diamin)
oder
B2) 1,4(5)-Cyclooctandimethanamin (BAMCO).

2. Härtbare Zusammensetzungen nach mindestens einem der vorhergehenden Ansprüche,
**dadurch gekennzeichnet,**
**dass** Modifizierungsmittel enthalten sind.

3. Härtbare Zusammensetzungen nach Anspruch 2,
**dadurch gekennzeichnet,**
**dass** als Modifizierungsmittel Benzylalkohol, Alkylphenole oder Kohlenwasserstoffharze enthalten sind.

4. Härtbare Zusammensetzungen nach Anspruch 3,
**dadurch gekennzeichnet,**
**dass** als Modifizierungsmittel Benzylalkohol enthalten ist.

5. Härtbare Zusammensetzungen nach mindestens einem der vorherigen Ansprüche,
**dadurch gekennzeichnet,**
**dass** Reaktionsbeschleuniger enthalten sind.

6. Härtbare Zusammensetzungen nach mindestens einem der vorherigen Ansprüche,
**dadurch gekennzeichnet,**
**dass** als Reaktionsbeschleuniger organische Säuren enthalten sind.

7. Härtbare Zusammensetzungen nach Anspruch 6,
**dadurch gekennzeichnet,**
**dass** als Reaktionsbeschleuniger Milchsäure und/oder Salicylsäure enthalten sind.

8. Härtbare Zusammensetzungen nach Anspruch 5,
**dadurch gekennzeichnet,**
**dass** als Reaktionsbeschleuniger tertiäre Amine enthalten sind.

9. Härtbare Zusammensetzungen nach mindestens einem der vorhergehenden Ansprüche,
**dadurch gekennzeichnet,**
**dass** Reaktivverdünner enthalten sind.

10. Härtbare Zusammensetzungen nach Anspruch 9,
**dadurch gekennzeichnet,**
**dass** als Reaktivverdünner mono- oder polyfunktionelle, Epoxidverbindungen enthalten sind.

11. Härtbare Zusammensetzungen nach mindestens einem der vorhergehenden Ansprüche,
**dadurch gekennzeichnet,**
**dass** Lösemittel enthalten sind.

12. Härtbare Zusammensetzungen nach mindestens einem der vorhergehenden Ansprüche,
**dadurch gekennzeichnet,**
**dass** zusätzlich Pigmente und/oder Füllstoffe enthalten sind.

13. Härtbare Zusammensetzungen nach mindestens einem der vorhergehenden Ansprüche,
**dadurch gekennzeichnet,**
**dass** zusätzlich Additive enthalten sind.

14. Härtbare Zusammensetzungen nach mindestens einem der vorhergehenden Ansprüche,
**dadurch gekennzeichnet,**
**dass** weitere Polyamine enthalten sind.

15. Härtbare Zusammensetzungen nach Anspruch 14,
**dadurch gekennzeichnet,**
**dass** Isophorondiamin enthalten ist.

16. Härtbare Zusammensetzungen nach Anspruch 14 oder 15,
**dadurch gekennzeichnet,**
**dass** Trimethylhexamethylendiamin, m-Phenylenbis(methylamin), 1,3- und/oder 1,4-Bis(aminomethyl)cyclohexan, Methylen-bis(4-aminocyclohexan), 3,3'-Dimethyl-4,4'-diaminodicyclohexyl-methan, Tricyclododecandiamin, Norbornandiamin, N-Aminoethylpiperazin und/oder Polyoxyalkylenamine enthalten sind.

17. Härtbare Zusammensetzungen nach Anspruch 14,
**dadurch gekennzeichnet,**
**dass** Polyaminoamide, Umsetzungsprodukte von Aminen mit Acrylnitril und/oder Mannichbasen enthalten sind.

18. Härtbare Zusammensetzungen nach mindestens einem der vorhergehenden Ansprüche,
**dadurch gekennzeichnet,**
**dass** weitere Polyamine in Mengen von 0,5 bis 95 Gew.-%, bevorzugt in Mengen von 10 bis 90 Gew.-%, und besonders bevorzugt in Mengen von 50 bis 80 Gew.-%, bezogen auf eingesetzte Amine, enthalten sind.

19. Verwendung von härtbaren Zusammensetzungen nach mindestens einem der Ansprüche 1 bis 18 in Epoxidsystemen, welche bei Umgebungstemperatur gehärtet werden.

20. Verwendung nach Anspruch 20, wobei die Härtungstemperaturen zwischen 0 und 35 °C, bevorzugt zwischen 5 und 30 °C liegen.

21. Verwendung von härtbaren Zusammensetzungen nach mindestens einem der Ansprüche 1 bis 19, wobei die Epoxidsysteme heißgehärtet werden.

22. Verwendung nach Anspruch 21, wobei die Härtungstemperaturen bei Heißhärtung zwischen 50 und 180 °C liegen.

23. Verwendung nach Anspruch 21, wobei die Härtungstemperaturen bei Heißhärtung zwischen 80 und 150 °C, bevorzugt zwischen 80 und 130 °C, liegen.

24. Verwendung von härtbaren Zusammensetzungen nach mindestens einem der Ansprüche 1 bis 18 in Beschichtungen.

25. Verwendung nach Anspruch 24 für Beschichtungen auf Metall, mineralischen Untergründen und Kunststoffen.

26. Verwendung nach Anspruch 24 für Fußbodenbeschichtungen.

27. Verwendung von härtbaren Zusammensetzungen nach mindestens einem der Ansprüche 1 bis 18 in Lacken.

28. Verwendung von härtbaren Zusammensetzungen nach mindestens einem der Ansprüche bis 18 für Polymerbeton, Reparatursysteme, Ankermassen, Klebstoffe, Faserverbundwerkstoffe, Vergussmassen, und Imprägnierungen.

## Claims

1. Curable compositions substantially containing
A) at least one epoxy resin, whereas polyepoxides based on bisphenol A diglycidyl ether, bisphenol F diglycidyl ether and/or cycloaliphatic types being contained as epoxy resins,
and
B) at least one curing agent selected from
B1) 1-aminopropyl-3(4)-(aminomethyl)cyclohexane (C64-diamine)
or
B2) 1,4(5)-bisaminomethylcyclooctane (BAMCO).

2. Curable compositions according to the preceding claim, **characterized in that** modifiers are contained.

3. Curable compositions according to Claim 2, **characterized in that** benzyl alcohol, alkylphenols or hydrocarbon resins are contained as modifiers.

4. Curable compositions according to Claim 3, **characterized in that** benzyl alcohol is contained as a modifier.

5. Curable compositions according to at least one of the preceding claims, **characterized in that** reaction accelerators are contained.

6. Curable compositions according to at least one of the preceding claims, **characterized in that** organic acids are contained as reaction accelerators.

7. Curable compositions according to Claim 6, **characterized in that** lactic acid and/or salicylic acid are contained as reaction accelerators.

8. Curable compositions according to Claim 5, **characterized in that** tertiary amines are contained as reaction accelerators.

9. Curable compositions according to at least one of the preceding claims, **characterized in that** reactive diluents are contained.

10. Curable compositions according to Claim 9, **characterized in that** mono- or polyfunctional epoxide compounds are contained as reactive diluents.

11. Curable compositions according to at least one of the preceding claims, **characterized in that** solvents are contained.

12. Curable compositions according to at least one of the preceding claims, **characterized in that** additional pigments and/or fillers are contained.

13. Curable compositions according to at least one of the preceding claims, **characterized in that** additives are additionally contained.

14. Curable compositions according to at least one of the preceding claims, **characterized in that** further polyamines are contained.

15. Curable compositions according to Claim 14, **characterized in that** isophoronediamine is contained.

16. Curable compositions according to Claim 14 or 15, **characterized in that** trimethylhexamethylenediamine, m-phenylenebis(methylamine), 1,3- and/or 1,4-bis(aminomethyl)cyclohexane, methylenebis(4-aminocyclohexane), 3, 3'-dimethyl-4, 4'-diaminodicyclohexylmethane, tricyclododecanediamine, norbornanediamine, N-aminoethylpiperazine and/or polyoxyalkylenamines are contained.

17. Curable compositions according to Claim 14, **characterized in that** polyaminoamides, reaction products of amines with acrylonitrile and/or Mannich bases are contained.

18. Curable compositions according to at least one of the preceding claims, **characterized in that** further polyamines are contained in amounts of from 0.5 to 95% by weight, preferably in amounts of from 10 to 90% by weight and particularly preferably in amounts of from 50 to 80% by weight, based on amines used.

19. Use of curable compositions according to at least one of Claims 1 to 18 in epoxide systems which are cured at ambient temperature.

20. Use according to Claim 19, the curing temperatures being between 0 and 35°C, preferably between 5 and 30°C.

21. Use of curable compositions according to at least one of Claims 1 to 19, the epoxide systems being hot-cured.

22. Use according to Claim 21, the curing temperatures during hot curing being between 50 and 180°C.

23. Use according to Claim 21, the curing temperatures during hot curing being between 80 and 150°C, preferably between 80 and 130°C.

24. Use of curable compositions according to at least one of Claims 1 to 18 in coatings.

25. Use according to Claim 24 for coatings on metal, mineral substrates and plastics.

26. Use according to Claim 24 for floor coatings.

27. Use of curable compositions according to at least one of Claims 1 to 18 in finishes.

28. Use of curable compositions according to at least one of Claims 1 to 18 for polymer concrete, repair systems, anchor materials, adhesives, fiber composite materials, potting compounds and impregnations.

## Revendications

1. Compositions durcissables contenant essentiellement :
A) au moins une résine époxy, où des polyépoxydes à base d'éther diglycidylique de bisphénol A, d'éther diglycidylique de bisphénol F et/ou de types cycloaliphatiques étant présents en tant que résines époxy,
et
B) au moins un agent durcisseur choisi parmi :
B1) la 3 (4)-(aminométhyl)-cyclohexane-propanamine (C64-diamine)
ou
B2) la 1,4(5)-cyclooctane-diméthanamine (BAMCO).

2. Compositions durcissables selon la revendication précédente, **caractérisées en ce que** des agents modificateurs sont présents.

3. Compositions durcissables selon la revendication 2, **caractérisées en ce que** de l'alcool benzylique, des alkylphénols ou des résines hydrocarbonées sont présents en tant qu'agents modificateurs.

4. Compositions durcissables selon la revendication 3, **caractérisées en ce que** de l'alcool benzylique est présent en tant qu'agent modificateur.

5. Compositions durcissables selon au moins l'une des revendications précédentes, **caractérisées en ce que** des accélérateurs de réaction sont présents.

6. Compositions durcissables selon au moins l'une des revendications précédentes, **caractérisées en ce que** des acides organiques sont présents en tant qu'accélérateurs de réaction.

7. Compositions durcissables selon la revendication 6, **caractérisées en ce que** de l'acide lactique et/ou de l'acide salicylique sont présents en tant qu'accélérateurs de réaction.

8. Compositions durcissables selon la revendication 5, **caractérisées en ce que** des amines tertiaires sont présentes en tant qu'accélérateurs de réaction.

9. Compositions durcissables selon au moins l'une des revendications précédentes, **caractérisées en ce que** des diluants réactifs sont présents.

10. Compositions durcissables selon la revendication 9, **caractérisées en ce que** des composés époxyde mono- ou polyfonctionnels sont présents en tant que diluants réactifs.

11. Compositions durcissables selon au moins l'une des revendications précédentes, **caractérisées en ce que** des solvants sont présents.

12. Compositions durcissables selon au moins l'une des revendications précédentes, **caractérisées en ce que** des pigments et/ou charges sont en outre présents.

13. Compositions durcissables selon au moins l'une des revendications précédentes, **caractérisées en ce que** des additifs sont en outre présents.

14. Compositions durcissables selon au moins l'une des revendications précédentes, **caractérisées en ce que** des polyamines supplémentaires sont présentes.

15. Compositions durcissables selon la revendication 14, **caractérisées en ce que** de l'isophoronediamine est présente.

16. Compositions durcissables selon la revendication 14 ou 15, **caractérisées en ce que** de la triméthylhexaméthylène-diamine, de la m-phénylène-bis-(méthylamine), du 1,3- et/ou du 1,4-bis(aminométhyl)cyclohexane, du méthylène-bis(4-aminocyclohexane), du 3,3'-diméthyl-4,4'-diaminodicyclohexylméthane, de la tricyclododécane-diamine, de la norbornane-diamine, de la N-aminoéthylpipérazine et/ou des polyoxyalkylène-amines sont présents.

17. Compositions durcissables selon la revendication 14, **caractérisées en ce que** des polyaminoamides, des produits de réaction d'amines avec de l'acrylonitrile et/ou des bases de Mannich sont présents.

18. Compositions durcissables selon au moins l'une des revendications précédentes, **caractérisées en ce que** des polyamines supplémentaires sont présentes en des quantités de 0,5 à 95 % en poids, de préférence en des quantités de 10 à 90 % en poids et particulièrement préférablement en des quantités de 50 à 80 % en poids, dans chaque cas par rapport aux amines utilisées.

19. Utilisation de compositions durcissables selon au moins l'une des revendications 1 à 18 dans des systèmes d'époxydes qui sont durcis à la température environnante.

20. Utilisation selon la revendication 19, dans laquelle les températures de durcissement sont comprises entre 0 et 35 °C, de préférence entre 5 et 30 °C.

21. Utilisation de compositions durcissables selon au moins l'une des revendications 1 à 19, dans laquelle les systèmes d'époxydes sont durcis à chaud.

22. Utilisation selon la revendication 21, dans laquelle les températures de durcissement lors du durcissement à chaud sont comprises entre 50 et 180 °C.

23. Utilisation selon la revendication 21, dans laquelle les températures de durcissement lors du durcissement à chaud sont comprises entre 80 et 150 °C, de préférence entre 80 et 130 °C.

24. Utilisation de compositions durcissables selon au moins l'une des revendications 1 à 18 dans des revêtements.

25. Utilisation selon la revendication 24 pour des revêtements sur du métal, des substrats minéraux et des matières plastiques.

26. Utilisation selon la revendication 24 pour des revêtements de sols.

27. Utilisation de compositions durcissables selon au moins l'une des revendications 1 à 18 dans des vernis.

28. Utilisation de compositions durcissables selon au moins l'une des revendications 1 à 18 pour du béton polymère, des systèmes de retouches, des matières d'ancrage, des adhésifs, des matériaux composites fibreux, des matières d'empotage et des imprégnations.
